# EUROPÄISCHE PATENTANMELDUNG

(11) **EP 4 488 472 A1**
(43) Veröffentlichungstag der Anmeldung: **08.01.2025**
(21) Anmeldenummer: 24186211.9
(22) Anmeldetag: 03.07.2024
(51) Int. Cl.: E04F 13/02, E04F 13/04, C04B 18/167, E04G 23/02, C04B 28/14

(54) **PUTZSYSTEM, VERFAHREN ZUR ZIRKULÄREN VERWENDUNG EINES PUTZSYSTEMS UND WAND MIT EINEM PUTZ**

(30) Priorität: 03.07.2023 DE 102023117543
(71) Anmelder: Breidenbach, Peter, 41751 Viersen (DE)
(72) Erfinder: Breidenbach, Peter, 41751 Viersen (DE)
(74) Vertreter: Patentanwälte Bauer Vorberg Kayser

(57) **Zusammenfassung**

Die vorliegende Erfindung betrifft ein Putzsystem bestehend wenigstens aus einem Unterputz (5) mit einer ersten Zusammensetzung und einem Oberputz (7) mit einer zweiten Zusammensetzung zum flächigen Aufbringung auf eine Wand (1) oder Decke, wobei zumindest der Unterputz (5) aus einer trockenen Putzzubereitung zum Anmischen mit Anmachwasser besteht, wobei der Unterputz (5) eine erste Zusammensetzung aufweist und der Oberputz (7) eine zweite Zusammensetzung aufweist, wobei der Unterputz (5) in einer ersten Schichtdicke d₁ und der Oberputz (7) in einer zweiten Schichtdicke d₂ verarbeitet ist, wobei die erste Schichtdicke d₁ grö-ßer ist als die zweite Schichtdicke d₂, und wobei der Unterputz (5) ein Lehmputz mit einer ersten Oberflächenfestigkeit und der Oberputz (7) ein Putz mit einer zweiten Oberflächenfestigkeit ist, wobei die zweite Oberflächenfestigkeit höher ist als die erste Oberflächenfestigkeit, wobei die erste Schichtdicke d₁ und die zweite Schichtdicke d₂ und die erste Zusammensetzung und die zweite Zusammensetzung derart aufeinander abgestimmt sind, dass eine Mischung aus dem Unterputz (5) und dem Oberputz (7) nach einem Rückbau und einer Zerkleinerung erneut als trockene Putzzubereitung zum Anmischen als Unterputz (5) verwendbar ist.

## Beschreibung

Die vorliegende Erfindung betrifft ein Putzsystem gemäß dem Oberbegriff des Patentanspruchs 1, ein Verfahren zum zirkulären Verwenden eines Putzsystems mit einem Unterputz und einem Oberputz gemäß Patentanspruch 6, sowie eine Wand mit einem Putz gemäß einem der Patentansprüche 1 bis 5.

In der Baubranche ist es im Hochbau allgemein üblich, dass Wände und Decken von Wohngebäuden verputzt werden. Es ist bekannt, die Außenfläche von Wänden mit einem Unter- oder Grundputz mit einer Schichtdicke von ca. 2 cm zu versehen und über den Unterputz noch einen Oberputz mit einer Schichtdicke von ca. 1 mm bis 6 mm anzubringen, der dem Schutz des Grundputzes und der Verbesserung der Oberflächeneigenschaften, bspw. der Optik dient.

Putz ist ein an Wänden und Decken aufgetragener Belag aus Putzmörtel oder Beschichtungen mit putzartigem Aussehen. Putzmörtel ist ein Gemisch aus Bindemittel, Gesteinskörnung, ggf. Zusätzen und Wasser.

Die Lagen eines Putzes (Unter-, Oberputze), die in ihrer Gesamtheit und in Wechselwirkung mit dem Putzgrund die Anforderungen an den Putz erfüllen, werden als Putzsystem bezeichnet.

Putz erreicht seine endgültigen Eigenschaften erst durch Verfestigung am Bauteil.

Hauptbestandteile eines Putzes sind Gesteinskörnung (Sand), Wasser und Bindemittel.

Das Bindemittel stellt eine Verbindung zwischen den einzelnen Körnern selbst und dem Untergrund, auf den der Putz aufgetragen wird, her. Durch das Bindemittel haften einerseits die Körner aneinander und andererseits der Putz an dem Untergrund. Als Bindemittel kommen im Stand der Technik unter anderem Kalk, Gips und Zement, als hydraulisch abbindende Bindemittel, Silikat als Bindemittel, das durch Verkieselung, eine chemische Reaktion mit den mineralischen Körnern und dem mineralischen Untergrund, erhärtet und Kunstharz als Bindemittel, das bei Zugabe eines Härters durch Polymerisation erhärtet, sowie Lehm als durch Trocknung erhärtendes Bindemittel zum Einsatz.

Im Baubereich übliche Putze bestehen in der Regel aus Zuschlägen mit dauerhaft und irreversibel erhärtenden Bindemitteln wie Kalk, Zement oder Gips.

Als weitere Bestandteile können zur Erzielung bestimmter Eigenschaften mineralische und organische Zusatzstoffe, Farbpigmente, Füllstoffe und Wirkstoffe zum Einsatz kommen.

Zusatzstoffe verändern die Eigenschaften des Putzes. Zum Beispiel wird mit Luftporenbildner die wärmedämmende Eigenschaft verbessert, indem im Putz Lufträume entstehen. Füllstoffe sollen erwünschte Verarbeitungseigenschaften erzielen und teilweise teure Gesteinskörnung ersetzen. Füllstoffe können auch Strukturstoffe sein. Diese sollen gewünschte, optische Erscheinungen bewirken, wie z.B. durch den Verzicht auf Gesteinskörnung und die Zugabe von Baumwolle. Mit Farbpigmenten wird der erwünschte Farbton eingestellt. Durch die Zugabe von Wirkstoffen, wie z. B. Bioziden, kann eine erhöhte Schimmelresistenz erreicht werden.

Den vorgenannten Putzen ist gemein, dass diese in der Regel eine feste, unlösbare Verbindung mit dem Untergrund eingehen und praktisch untrennbar auf dem Untergrund anhaften. Dadurch ist sowohl das Material des Untergrundes als auch der Putz selbst nicht sortenrein trennbar und nicht materialerhaltend wiederverwendbar.

Die Bauwirtschaft steht derzeit vor der Herausforderung, eingesetzte Baumaterialien lange und möglichst ohne Qualitätsverlust in geschlossenen technischen oder stofflichen Kreisläufen zu führen, allgemein als Kreislaufwirtschaft bezeichnet, oder speziell im Bausektor mit dem Schlagwort zirkuläres Bauen. Damit einher geht die Anforderung, Baustoffe und Rohstoffe für Produkte und Gebäude so zu planen und einzusetzen sind, dass sie entweder in gleicher Qualität erhalten und wiedergenutzt, also in einem technischen Kreislauf geführt werden können oder komplett abbaubar in den stofflichen Kreislauf zurückgeführt werden können. Bei richtiger Planung und Materialauswahl können die verwendeten Ressourcen sozusagen in endlosen Kreisläufen geführt und so stetig wiedergenutzt werden, statt sie als Abfall zu entsorgen.

Um das zirkuläre Bauen erfolgreich umsetzen zu können, ist es zusätzlich notwendig, dass in den Gebäuden schadstofffreie, langlebige und vollständig nachnutzbare Baustoffe sowie Bauteile eingesetzt werden, die sich sortenrein trennen und auch reparieren lassen oder vollständig kompostierbar sind. Nachhaltiges und kreislauffähiges Bauen beginnt also mit der richtigen Materialauswahl und einer rückbaubaren Planung.

Die zirkuläre Verwendbarkeit und Ihr Einfluss auf den CO2-Footprint von Baustoffen rückt zunehmend in den Blickwinkel der Bauherren, Planer, der anderen Baubeteiligten und auch der Banken.

Einige Rohstoffe, beispielsweise Glas und Stahl, werden bereits heute in größerem Umfang in die Produktion rückgeführt. Dagegen werden Beton, Mauerziegel, Glaswolle, Holzfaserplatten und andere Baustoffe nur in sehr geringen Mengen wiederverwertet. Grund dafür sind die Qualitätsanforderungen an diese Materialien sowie die Untrennbarkeit. Das Wiederverwendungspotenzial aller verbauten Rohstoffe im Bauwesen liegt laut Bundesinstitut für Bau-, Stadt- und Raumforschung (BBSR) heute bei ca. sieben Prozent und könnte bei positiven Rahmenbedingungen bis 2050 auf ca. 20 Prozent angehoben werden. Der Ressourcenverbrauch sowie die Rückbaupotenziale werden zu einem großen Teil in der Planungsphase von Entscheidungen über Gestaltung, Konstruktion, Details und Baumaterialien bestimmt.

Gemäß dem oben beschriebenen Stand der Technik ist eine zirkuläre Verwendung der für die Erstellung von Wänden verwendeten Materialien nicht möglich.

Es ist die Aufgabe der vorliegenden Erfindung, ein Putzsystem zur Verfügung zu stellen, das eine zirkuläre Verwendung des Putzes ermöglicht und die aus dem Stand der Technik bekannten und geforderten Oberflächeneigenschaften aufweist. Ferner ist es die Aufgabe der vorliegenden Erfindung, einen Aufbau für eine zirkulär wiederverwertbare Wand anzugeben sowie ein Verfahren zur zirkulären Verwendung eines Putzes.

Bevorzugte Ausführungsformen, Merkmale und Eigenschaften des vorschlagsgemäßen Gegenstands entsprechen denjenigen des vorschlagsgemäßen Verfahrens und umgekehrt.

Vorteilhafte Ausgestaltungen und Varianten der Erfindung ergeben sich aus den Unteransprüchen und der nachfolgenden Beschreibung. Die in den Unteransprüchen einzeln aufgeführten Merkmale können in beliebiger, technisch sinnvoller Weise miteinander als auch mit den in der nachfolgenden Beschreibung näher erläuterten Merkmalen kombiniert werden und andere vorteilhafte Ausführungsvarianten der Erfindung darstellen.

Ein erfindungsgemäßes Putzsystem besteht wenigstens aus einem Unterputz mit einer ersten Zusammensetzung und einem Oberputz mit einer zweiten Zusammensetzung zum flächigen Aufbringen auf eine Wand oder Decke. Zumindest der Unterputz besteht aus einer trockenen oder erdfeuchten Putzzubereitung zum Anmischen mit Anmachwasser. Der Unterputz kann damit in Säcken oder anderen Gebinden gelagert und ausgeliefert werden.

Der Unterputz weist eine erste Zusammensetzung auf und der Oberputz eine zweite Zusammensetzung. Durch unterschiedliche Zusammensetzungen von Unterputz und Oberputz können unterschiedliche Eigenschaften des jeweiligen Putzes realisiert werden, sodass eine optimale Anpassung an die geforderten Eigenschaften des jeweiligen Putzes, bspw. eine Haftfähigkeit, eine Verarbeitungskonsistenz, optische Eigenschaften oder Eigenschaften der Oberfläche, möglich ist.

Der Unterputz wird in einer ersten Schichtdicke und der Oberputz in einer zweiten Schichtdicke verarbeitet, wobei in der Regel die erste Schichtdicke größer ist als die zweite Schichtdicke. Ein typischer Aufbau aus einem Unterputz und einem Oberputz weist damit eine dickere Schicht des Unterputzes und eine dünnere Schicht des Oberputzes auf.

Der Unterputz ist grundsätzlich ein Lehmputz gemäß DIN 18947: 2018-12 mit einer ersten Oberflächenfestigkeit und der Oberputz ist ein Putz, vorzugsweise, ein Gips-, Kalk- Zement- oder Kunstharzputz mit einer zweiten Oberflächenfestigkeit, wobei die zweite Oberflächenfestigkeit höher ist als die erste Oberflächenfestigkeit. Der Unterputz ist damit ein Putz auf der Basis von Lehm als Bindemittel. Ein solcher Lehmputz weist naturgemäß eine geringere Oberflächenfestigkeit auf, als die oben genannten, aus dem Stand der Technik bekannten Putze, die hydraulisch abbinden, oder durch Verkieselung oder chemisch durch Zugabe eines Härters aushärten.

Lehmputze sind grundsätzlich und nach DIN 18947: 2018-12 wasserlöslich und enthalten keine weiteren Bindemittel oder solche nur in einem Umfang, dass die Wasserlöslichkeit dadurch nicht eingeschränkt wird. Das Material der mit Lehmputzen beschichteten Untergründe kann somit unter Einsatz von Wasser vollständig sortenrein vom Untergrund getrennt werden und beide Materialien können verlustfrei wiederverwendet werden. Lehmputz ist unbegrenzt reversibel und nass oder trocken leicht vom Putzgrund trennbar. Die Verarbeitung ist einfach und sicher. Hinzu kommen unerreichte ökologische, energetische, raumklimatische und andere Vorzüge. Aus diesen Gründen ist Lehmputz ein idealer Unterputz (auch Grundputz genannt) für fast alle Untergründe. Lehmputz weist aber in Bezug auf eine im Vergleich zu anderen Putzen reduzierte Oberflächenfestigkeit, insbesondere seine Wisch- und Stoßfestigkeit Nachteile auf, die bislang einem Einsatz im öffentlichen Bauen, im Gewerbebau sowie im allgemeinen Wohnbau entgegenstehen.

Unter dem in der vorliegenden Anmeldung verwendeten Begriff Oberflächenfestigkeit werden die für Putze relevanten Eingeschalten Abrieb und Druckfestigkeit zusammengefasst. Diese Eigenschaften sind für die Nutzung einer entsprechend beschichteten Oberfläche ausschlaggebend und beeinflussen maßgeblich die haptischen Eigenschaften eines Putzes, d.h. ob und wie viel Putz von der Oberfläche abrieselt, und wie widerstandsfähig der Putz gegen Stöße und andere Druckbelastungen ist und wie der Putz weiter beschichtet werden kann, bspw. mit Tapeten, oder Anstrich.

Lehmputz ist derzeit noch nicht als bauüblich zu bezeichnen.

Da Lehm nicht abbindet, sondern nur trocknet, ist die Bearbeitungszeit von der Saugfähigkeit des Untergrundes, der Schichtstärke, der Belüftung sowie der Temperatur abhängig. Zu schnelle Trocknung führt zu Rissbildung bzw. bei dünneren Schichten zur Verkürzung der Bearbeitungszeit. Die bevorzugte erdfeuchte Lieferform ist für handelsübliche Putzmaschinen nicht geeignet. Die Lieferform in Big-Bags ist ungewohnt. Ein Bezug ist nicht bei allen Händlern möglich. Putzkolonnen kennen das Material nicht etc.

Dies verhindert bisher den breiten Einsatz im öffentlichen Bauen, im Gewerbebau sowie im allgemeinen Wohnbau.

Durch einen Oberputz mit einer höheren Oberflächenfestigkeit, was insbesondere eine Abrieb und Druckfestigkeit anbelangt, kann eine belastbare Oberfläche erzielt werden. Putze auf Basis von Gips, Kalk oder Zement sind erprobt, was die weitere Beschichtung mit Farben, Tapeten oder anderen Materialien betrifft. Die Oberflächenfestigkeit hinsichtlich bspw. Abrieb und Stoß, sowie andere wichtige Eigenschaften, bspw. Verarbeitungstechniken, Verarbeitungsablauf, Auftragsstärken, Abbindezeit, Trocknungszeit sowie die Vorbereitung für weitere Schichten sind bekannt und werden so erwartet.

Für eine zirkuläre Verwendbarkeit des eingesetzten Materials ist es notwendig, dass die erste Schichtdicke und die zweite Schichtdicke und die erste Zusammensetzung und die zweite Zusammensetzung derart aufeinander abgestimmt sind, dass eine Mischung aus dem Unterputz und dem Oberputz nach einem Rückbau und einer Zerkleinerung erneut als trockene Putzzubereitung zum Anmischen als Unterputz verwendbar ist. Das bedeutet insbesondere, dass ein Anteil des Oberputzes und von Zuschlagstoffen so bemessen ist, dass die Mischung aus Unterputz und Oberputz wieder als Unterputz verwendbar ist.

Der Unterputz des vorliegenden Putzsystems weist grundsätzlich die Eigenschaften eines Lehmputzes, insbesondere die mechanischen Eigenschaften wie Druckfestigkeit, Abrieb, Haftfestigkeit und Biegezugfestigkeit, gemäß der vorgenannten DIN auf. Im Erstauftrag, d.h. bei einer erstmaligen Anwendung des vorliegenden Putzsystems ist der Unterputz ein Lehmputz gemäß DIN 18947:2018-12. In der Wiederverwendung kann in Bezug auf die zulässigen Zusatzstoffe eine Abweichung von der zum Zeitpunkt der Anmeldung gültigen DIN möglich und auch notwendig sein. Gemäß DIN 18947:2018-12 sind als Zusatzstoffe nur mineralische Zusatzstoffe in Form von natürlichen Gesteinskörnungen, Ziegelmehl aus mörtelfreien Ziegeln, Blähsplit, Blähton, Blähglas, Schaumglas, Blähschiefer und Naturbims sowie organische Zusatzstoffe zulässig. Da in der Wiederverwertung der mit dem ursprünglichen Unterputz gemeinsam abgetragene Oberputz als Zusatzstoff anzusehen ist, ist die Mischung - je nach Zusammensetzung des Oberputzes - nicht mehr DIN-konform, sondern eine Baustellenmischung, die insbesondere in ihren mechanischen Eigenschaften, insbesondere hinsichtlich Abrieb und Druckfestigkeit einem DIN-konformen Lehmputz entspricht.

Es ist zu betonten, dass der Unterputz der vorliegenden Erfindung weder im Erstauftrag noch in der Wiederverwendung zusätzliche, insbesondere wasserunlösliche Bindemittel aufweist. Bevorzugt kommt als einziges Bindemittel Lehm zum Einsatz.

In einer bevorzugten Ausgestaltung weist der Oberputz einen Anteil Lehm als Zusatzstoff auf, wobei der Anteil an Lehm so auf die übrigen Bestandteile abgestimmt ist, dass der Anteil möglichst groß ist, jedoch die gewünschte Oberflächenfestigkeit erreicht wird. Auf diese Weise wird eine zirkuläre Verwendung der Mischung weiter begünstigt, vorzugsweise das Raumklima durch den Anteil an Lehm in dem Oberputz verbessert und gleichzeitig die gewünschte Oberflächenfestigkeit erreicht.

Sowohl der Unterputz als auch der Oberputz können Pflanzenfasern zur Armierung aufweisen.

Der Unterputz weist eine Schichtdicke von 5 mm bis 30 mm und der Oberputz eine Schichtdicke von 1mm bis 6 mm auf.

Ein erfindungsgemäßes Verfahren zur zirkulären Verwendung eines Putzsystems umfassend zumindest einen Unterputz und einen Oberputz gemäß der vorstehenden Beschreibung und weist zumindest folgende Schritte auf:
In einem ersten Schritt wird der Unterputz mit Anmachwasser angemischt, sodass dieser nachfolgend mit dem gewünschten Gerät, d.h. insbesondere von Hand und/oder maschinell verarbeitbar ist.

Anschließend wird der Unterputz auf einen vorbereiteten und zu verputzenden Untergrund aufgebracht und getrocknet. Der Untergrund muss hierfür in der Regel trocken und staubfrei sein.

Die Trocknung des Unterputzes kann natürlich, d.h. durch eine Trocknung und Lüftung ohne Unterstützung erfolgen, die Trocknungsdauer hängt dann aber stark von äußeren Rahmenbedingungen wie Temperatur, relativer Luftfeuchtigkeit und Luftaustausch ab. Eine kontrolliertere und in der Regel schnellere Trocknung kann durch eine Unterstützung des Trocknungsvorgangs durch Gebläse und/oder Bautrockner erreicht werden. Durch die Gebläse wird eine Luftaustauschrate erhöht, durch Bautrockner kann die Temperatur der Trocknungsluft angehoben werden, sodass diese größere Mengen an Feuchtigkeit aufnehmen und abtransportieren kann.

In einem weiteren Schritt wird der Oberputz auf den Unterputz aufgebracht. Dies kann in der Regel erfolgen, sobald der Unterputz eine definierte Restfeuchte erreicht hat, in anderen Worten also ausreichend abgetrocknet ist.

Nach dem Aufbringen des Oberputzes wird auch dieser getrocknet und kann, wenn dies gewünscht ist, nach dem Trocknen noch weiter beschichtet werden, bspw. mit Farbe oder Tapete.

Zu diesem Zeitpunkt wird das Gebäude und die so fertig erstellte Wand in Benutzung genommen, d.h. es kann die gewünschte öffentliche, Wohn- oder Gewerbenutzung erfolgen, bis zu dem Zeitpunkt, an dem das betreffende Gebäude oder die betreffende Wand oder nur der Putz (bspw. für neue Leitungen etc.) außer Nutzung genommen werden soll. Dies kann z.B. der Fall sein, wenn eine nicht tragende Gebäudewand entfernt oder versetzt wird, umgestaltet werden soll, oder das Gebäude insgesamt außer Nutzung gestellt wird. Ist das der Fall, so sind zunächst ablösbare Beschichtungen, insbesondere Tapeten oder dergleichen von der Wand zu entfernen. Anstrichstoffe auf dem abzutragenden Putz stören aufgrund der geringen Menge das beschriebene Putzsystem grundsätzlich nicht. Diese Anstriche sollten aber zuvor auf ihre Zusammensetzung und Inhaltsstoffe analysiert werden, was beim BIM (Building Information Modeling) kein Problem darstellt.

Anschließend wird der Verbund aus Unterputz und Oberputz als Mischung von der Wand abgetragen.

Die Mischung kann dann direkt oder nach einer vorherigen Aufbereitung erneut als Unterputz verwendet werden.

Nach dem Abtrag des Putzsystems können die Steine oder Plansteine eines darunterliegenden Mauerwerkes oder die Bauplatten einer Trockenbauwand sofern wasserlöslicher Mörtel oder Kleber verwendet wurde, beschädigungsfrei abgetragen oder ausgebaut und ebenfalls vollständig wiederverwendet werden.

Als Oberputz kommt vorzugsweise ein Kalk-, Gips-, oder Zementputz zum Einsatz. Kalk-, Gips-, und Zementputze sind aus dem Stand der Technik hinreichend bekannt und den ausführenden Handwerkern in ihrer Verarbeitung und Handhabung geläufig und weisen die geforderten mechanischen Eigenschaften bzgl. Oberflächenfestigkeit und Optik auf. Ein Einsatz als Oberputz bietet sich daher an.

In einer bevorzugten Ausgestaltung des Verfahrens erfolgt das Abtragen von Ober- und Unterputz trocken, d.h. ohne den Einsatz von Wasser, durch mechanische Verfahren. Der Putz kann in kleinerem Umfang einfach von der Wand oder Decke abgeschlagen oder abgestemmt werden. Eine besonders kontrollierte und mit geringen Beschädigungen des Untergrunds verbundene Methode, die daher bevorzugt Verwendung findet, ist das Fräsen. In einer bevorzugten Ausgestaltung wird der Verband aus Unterputz und Oberputz von der Wand bzw. Decke abgefräst.

Zur Erleichterung einer Wiederverwendung erfolgt nach dem Schritt des Abtragens oder unmittelbar damit verbunden eine Aufbereitung der Mischung.

Die Aufbereitung kann bspw. eine Zerkleinerung des abgetragenen Materials umfassen. Das bedeutet, dass bei Methoden des Abtragens, bei denen größere Teile aus Unterputz und Oberputz von der Wand oder Decke abgelöst werden, vor einer Wiederverwendung vorzugsweise eine Zerkleinerung durch Brechen, Mahlen oder anderweitiges Zerkleinern der Mischung erfolgt. Alternativ wird das abgetragene Material beim Abfräsen direkt zerkleinert.

Um Überkorn in dem wiederzuverwertenden Material zu vermeiden, kann die Aufbereitung der Mischung vor der erneuten Verwendung ein Sieben umfassen. Auf diese Weise können zu große Teile, insbesondere des wasserunlöslichen Oberputzes, aus der Mischung entfernt werden.

In einer Weiterbildung kann ein abgesiebter Teil der Mischung zerkleinert, vorzugsweise ein weiteres Mal gesiebt und entweder der Mischung hinzugefügt oder separat wiederverwertet werden. Abhängig davon, ob eine Aufbereitung ganz oder teilweise vor Ort, d.h. an dem Ort, an dem das Abtragen des Putzes erfolgt, oder ob der abgetragene Putz an einem anderen Ort aufbereitet wird, kann ein unterschiedliches Vorgehen sinnvoll sein.

Insbesondere bei einer mehrfachen Wiederverwendung, d.h. bei einem mehrfachen Durchlaufen des vorstehend beschriebenen Verfahrens kann es zur Aufrechterhaltung der Qualität des gewonnenen Materials notwendig sein, der Mischung vor dem Schritt der erneuten Verwendung ein zusätzlicher Anteil Lehm als Bindemittel zuzumischen, um die Abmagerung des Unterputzes durch mehrfache Aufbereitung auszugleichen.

Es ist ferner möglich, die Mischung vor dem Schritt der erneuten Verwendung als Unterputz zu lagern. Die Lagerung kann insbesondere in Silos oder Big-Bags erfolgen.

Sofern im ursprünglichen Putzaufbau Armierungsgewebe eingesetzt wurden, können diese mit einer dadurch abgegrenzten Decklage abgezogen werden. Die hierbei abfallende Decklage wird dem vorstehenden Prozess zugeführt, das Gewebe kann theoretisch ebenfalls wiederverwendet werden. Eine darunterliegende Lage, die ggf. an der Wand oder Decke verbleibt kann ebenfalls gemäß dem vorstehend beschriebenen Verfahren abgetragen und wiederverwertet werden.

Die vorliegende Erfindung wird nachfolgend anhand von Ausführungsbeispielen unter Bezugnahme auf die beigefügten Figuren eingehend erläutert. Es zeigen:
- Figur 1: ein Ausführungsbeispiel einer gemäß der vorliegenden Anmeldung aufgebauten Wand,
- Figur 2: den Wandaufbau aus Figur 1 in einem Schnitt und
- Figur 3: ein Ablaufdiagramm eines Verfahrens gemäß der vorliegenden Anmeldung.

In den Figuren bezeichnen - soweit nicht anders angegeben - gleiche Bezugszeichen gleiche oder einander entsprechende Komponenten mit gleicher Funktion.

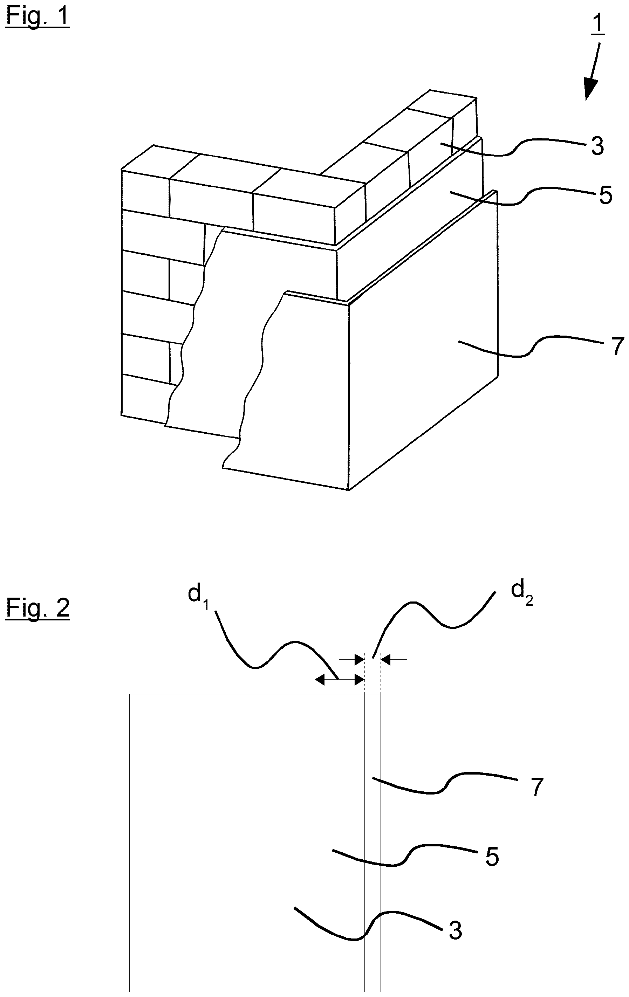

Figur 1 zeigt ein erstes Ausführungsbeispiel einer gemäß der vorliegenden Anmeldung aufgebauten Wand 1, die mit einem Putzsystem gemäß der vorliegenden Anmeldung beschichtet, d. h. verputzt ist.

Auf ein Mauerwerk 3, das in Figur 1 schematisch angedeutet ist, ist ein Unterputz 5 aufgebracht, der von einem Oberputz 7 bedeckt ist. Als Unterputz 5 kommt ein Lehmputz, d. h. ein Putz, bei dem Lehm als Bindemittel eingesetzt ist, zum Einsatz. Dieser Putz ist aufgrund des Bindemittel Lehm wasserlöslich und erhärtet durch einfaches Abtrocknen und ist durch eine Zugabe von Wasser unbegrenzt reversibel verwendbar. Im vorliegenden Ausführungsbeispiel kommt ein Lehm Putz zum Einsatz, dem zusätzlich zu Lehm als Bindemittel mineralische Sande und Recyclat-Körnungen als Körnung und Zuschläge beigemischt sind.

Der so zusammengesetzte Unterputz 5 ist auf das Mauerwerk 3 in einer ersten Schichtdicke d₁ von ca. 2 cm aufgetragen. Der Unterputz 5 ist mit dem Oberputz 7 in einer zweiten Schichtdicke d₂ von ca. 5 mm bedeckt.

Figur 2 zeigt eine Schnittdarstellung der Wand 1 aus Figur 1.

In den Figur 2 dargestellten Ansicht ist besonders gut die Anordnung des Unterputzes 5 auf dem Mauerwerk 3 sowie die Anordnung des Oberputzes 7 auf dem Unterputz 5 zu erkennen. In Figur 2 sind außerdem die senkrecht zum Mauerwerk 3 gemessenen Schichtdicken d₁, d₂ eingezeichnet. Es geht durch diese Darstellung damit deutlich hervor, dass der Unterputz 5 mit einer deutlich größeren ersten Schichtdicke d₁ als der Oberputz 7 aufgetragen ist.

Gemäß der vorliegenden Anmeldung sind die beiden Schichtdicken d₁, d₂ sowie eine Zusammensetzung des unter Putzes 5 und eine Zusammensetzung des Ober Putzes 7 derart aufeinander abgestimmt, dass diese, wenn sie gemeinsam von dem Mauerwerk 3 abgetragen werden, erneut als Unterputz 5 verwendet werden können.

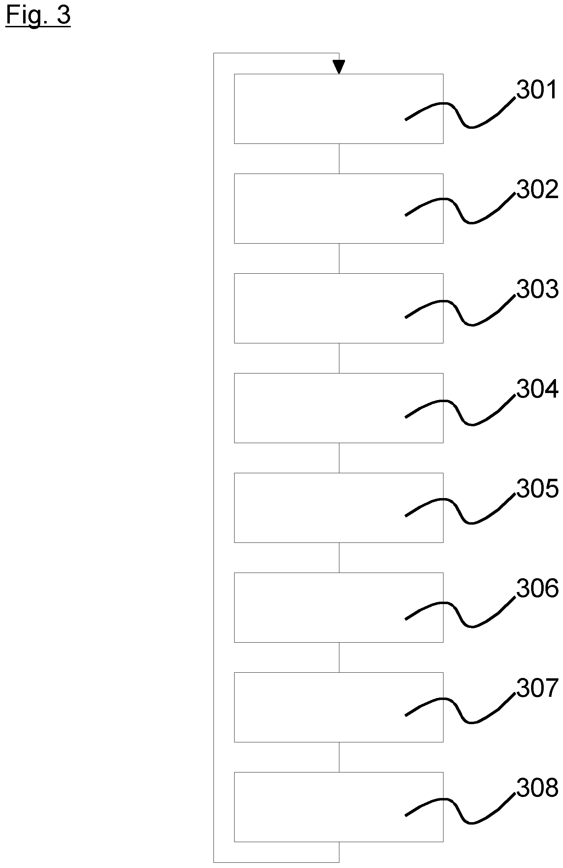

Figur 3 zeigt ein beispielhaftes Verfahren 300 zur zirkulären Verwendung eines Putzsystems gemäß der vorliegenden Anmeldung.

In einem ersten Schritt 301 wird der Unterputz 5 mit Anmachewasser an gemischt und zu einer Verarbeitbarkeit Masse angerührt. Das Einmischen des Unterputzes 5 kann entweder vor Ort, d. h. auf der Baustelle selbst, erfolgen oder werksseitig erfolgen.

In einem zweiten Schritt 302 wird der Unterputz 5 auf einen zu verputzen Untergrund, beispielsweise ein Mauerwerk 3 in der vorgesehenen ersten Schichtdicke d₁ aufgebracht und geglättet. Das Aufbringen des Unterputzes 5 kann mit üblichen Verfahren, d. h. insbesondere manuell mit einer Kartätsche und entsprechenden Kellern erfolgen oder maschinell mit einer Verputzmaschine.

In einem dritten Schritt 303 wird der Unterputz 5 getrocknet. Das Abtrocknen des Unterputzes 5 kann natürlich erfolgen, d. h. insbesondere ohne den Einsatz zusätzlicher Gerätschaften wobei in diesem Fall selbst bei einem durch Querlüften erhöhten Luftaustausch starke Variationen in der Trocknungszeit des Unterputzes 5 auftreten können. Alternativ kann das Abtrocknen des Unterputzes 5 maschinell durch Gebläse und/oder Heizeinrichtungen und/oder Bautrockner unterstützt werden, sodass durch eine angepasste Temperatur und Luftfeuchtigkeit ein kontrolliertes Abtrocknen des Unterputzes 5 erreicht werden kann.

Wenn der Unterputz 5 die gewünschte Restfeuchtigkeit erreicht hat, so wird ein einem Schritt 304 auf diesen der Oberputz 7, im vorliegenden Ausführungsbeispiel ein klassischer Kalkputz in einer zweiten Schichtdicken d₂ von ca. 5 mm aufgetragen. Der Oberputz 7 ist im vorliegenden Ausführungsbeispiel durch Lehm als Zuschlagsstoff an den Unterputz 5 angepasst, jedoch derart ausgestaltet, dass er eine für den Wohnbau gewünschte Oberflächenfestigkeit nicht unterschreitet.

Der Oberputz 7 kann entsprechend der ästhetischen Wünsche des Bauherren geglättet oder strukturiert ausgeführt sein.

Und nach einer Trocknung in einem folgenden Schritt 305 auch optional weiter beschichtet werden, beispielsweise mit Farbe, Tapeten oder anderen Wandberghängen.

Wenn die Wand 1 so fertiggestellt ist, kann in einem weiteren Schritt 306 die Wand bzw. das Gebäude Nutzung genommen werden. Nach Ablauf einer Nutzungsdauer der Wand 1 zu einem Zeitpunkt, zu dem ein Rückbau der Wand bzw. des Gebäudes erfolgen soll in einem weiteren Schritt 307 dass aus dem Unterputz 5 und dem Unterputz 7 gebildete Putzsystem von dem jeweiligen Untergrund, vorliegend dem Mauerwerk 3 abgetragen werden. Das Abtragen erfolgt vorzugsweise durch Abfräsen des Oberputzes 7 und des Unterputzes 5, wobei beispielsweise Tapeten zuvor von der Wand 1 zu entfernen sind.

Durch ein Abfräsen des Putzsystems wird die Mischung aus Unterputz 5 und Oberputz 7 gleichzeitig zerkleinert, sodass diese nach einem Absieben zur Entfernung von Überkorn in einem weiteren Schritt 308 erneut als Unterputz 5 eingesetzt werden kann. Dadurch, dass das Putzsystem durch Abfräsen von dem Mauerwerk 3 abgetragen wird, wird eine weitestgehende Unversehrtheit des Mauerwerks 3 sichergestellt, sodass auch dieses zirkulär wiederverwendet werden kann.

### Bezugszeichenliste

- 1: Wand
- 3: Mauerwerk
- 5: Unterputz
- 7: Oberputz
- d₁: erste Schichtdicke
- d₂: zweite Schichtdicke
- 301-308: Verfahrensschritte

## Patentansprüche

1. Putzsystem bestehend wenigstens aus einem Unterputz (5) mit einer ersten Zusammensetzung und einem Oberputz (7) mit einer zweiten Zusammensetzung zum flächigen Aufbringung auf eine Wand (1) oder Decke, wobei
zumindest der Unterputz (5) aus einer trockenen oder erdfeuchten Putzzubereitung zum Anmischen mit Anmachwasser besteht, wobei der Unterputz (5) eine erste Zusammensetzung aufweist und der Oberputz (7) eine zweite Zusammensetzung aufweist, wobei
der Unterputz (5) in einer ersten Schichtdicke d₁ und der Oberputz (7) in einer zweiten Schichtdicke d₂ verarbeitet ist, wobei die erste Schichtdicke d₁ größer ist als die zweite Schichtdicke d₂, und wobei
der Unterputz (5) ein Lehmputz mit einer ersten Oberflächenfestigkeit und der Oberputz (7) ein Putz mit einer zweiten Oberflächenfestigkeit ist, wobei die zweite Oberflächenfestigkeit höher ist als die erste Oberflächenfestigkeit,
**dadurch gekennzeichnet, dass**
die erste Schichtdicke d₁ und die zweite Schichtdicke d₂ und die erste Zusammensetzung und die zweite Zusammensetzung derart aufeinander abgestimmt sind, dass eine Mischung aus dem Unterputz (5) und dem Oberputz (7) nach einem Rückbau und einer Zerkleinerung erneut als trockene Putzzubereitung zum Anmischen als Unterputz (5) verwendbar ist.

2. Putzsystem gemäß Patentanspruch 1,
**dadurch gekennzeichnet, dass**
der Oberputz (7) ein Gips-, Kalk oder Zementputz ist.

3. Putzsystem gemäß Patentanspruch 2,
**dadurch gekennzeichnet, dass**
der Oberputz (7) einen Anteil Lehm als Zusatzstoff aufweist, wobei der Anteil Lehm so auf die übrigen Bestandteile abgestimmt ist, dass der Anteil möglichst groß ist, jedoch eine gewünschte Oberflächenfestigkeit erreicht wird.

4. Putzsystem gemäß einem der vorhergehenden Ansprüche,
**dadurch gekennzeichnet, dass**
der Unterputz (5) und/oder der Oberputz (7) Pflanzenfasern oder Tierhaar zur Armierung aufweisen.

5. Putzsystem gemäß einem der vorhergehenden Ansprüche,
**dadurch gekennzeichnet, dass**
der Unterputz (5) eine Schichtdicke von 5 mm bis 30 mm aufweist und der Oberputz (7) eine Schichtdicke von 1 mm bis 6 mm aufweist.

6. Verfahren zur zirkulären Verwendung eines Putzsystems umfassend zumindest einen Unterputz (5) und einen Oberputz (7) gemäß einem der vorhergehenden Ansprüche umfassend zumindest folgende Schritte:
- Anmischen des Unterputzes (5) mit Anmachwasser
- Aufbringen eines Unterputzes (5) auf einen zu Verputzenden Untergrund
- Trocknen des Unterputzes (5)
- Aufbringen des Oberputzes (7) auf den Unterputz (5)
- Trocknen des Oberputzes (7)
- Abtragen des Verbundes aus Unterputz (5) und Oberputz (7) als Mischung
- Erneute Verwendung der Mischung als neuer Unterputz (5).

7. Verfahren gemäß Anspruch 6,
**dadurch gekennzeichnet, dass**
als Oberputz (7) ein Kalk-, Gips-, oder Zementputz verwendet wird.

8. Verfahren gemäß einem der Ansprüche 6 oder 7,
**dadurch gekennzeichnet, dass**
das Abtragen trocken durch mechanische Verfahren, insbesondere Fräsen erfolgt.

9. Verfahren gemäß einem der Ansprüche 6 bis 8,
**dadurch gekennzeichnet, dass**
nach oder mit dem Schritt des Abtragens eine Aufbereitung der Mischung erfolgt.

10. Verfahren gemäß Anspruch 9,
**dadurch gekennzeichnet, dass**
die Aufbereitung eine Zerkleinerung der Mischung umfasst.

11. Verfahren gemäß einem der Ansprüche 9 oder 10,
**dadurch gekennzeichnet, dass**
die Aufbereitung ein Sieben der Mischung umfasst.

12. Verfahren gemäß Anspruch 11,
**dadurch gekennzeichnet, dass**
ein abgesiebter Teil der Mischung zerkleinert und erneut gesiebt wird.

13. Verfahren gemäß einem der Ansprüche 6 bis 12,
**dadurch gekennzeichnet, dass**
der Mischung vor dem Schritt der erneuten Verwendung ein zusätzlicher Anteil Lehm zugemischt wird.

14. Verfahren gemäß einem der Ansprüche 6 bis 13,
**dadurch gekennzeichnet, dass**
die Mischung vor dem Schritt der erneuten Verwendung als Unterputz (5) gelagert wird, insbesondere in Silos oder Big-Bags.

15. Wand mit einem Putz,
**dadurch gekennzeichnet, dass**
der Putz mit einem Putzsystem gemäß einem der Patentansprüche 1 bis 5 erstellt ist.
